Europäisches Patentamt
(19) European Patent Office
Office européen des brevets

(11) Numéro de publication : **0 216 836 B1**

(12) **FASCICULE DE BREVET EUROPEEN**

(45) Date de publication du fascicule du brevet :
20.03.91 Bulletin 91/12

(51) Int. Cl.$^5$ : **A21C 1/04, A47J 43/044**

(21) Numéro de dépôt : 86901911.7

(22) Date de dépôt : 26.03.86

(86) Numéro de dépôt international :
PCT/FR86/00105

(87) Numéro de publication internationale :
WO 86/05658 09.10.86 Gazette 86/22

(54) **APPAREIL DE PETRISSAGE TRANSFORMABLE EN MELANGEUR ET EN BATTEUR.**

(30) Priorité : 26.03.85 FR 8504611

(43) Date de publication de la demande :
08.04.87 Bulletin 87/15

(45) Mention de la délivrance du brevet :
20.03.91 Bulletin 91/12

(84) Etats contractants désignés :
AT BE CH DE FR GB IT LI LU NL SE

(56) Documents cités :
FR-A- 468 124
FR-A- 614 606
FR-A- 656 624
FR-A- 2 297 594
FR-A- 2 515 001
FR-A- 2 519 267
US-A- 3 635 147
US-A- 3 995 840

(73) Titulaire : LOISELET, Michel Résidence Le
Chantilly
7, avenue du Général de Gaulle - App. 47
F-30100 Ales (Gard) (FR)

(72) Inventeur : LOISELET, Michel Résidence Le
Chantilly
7, avenue du Général de Gaulle - App. 47
F-30100 Ales (Gard) (FR)

(74) Mandataire : Herrburger, Pierre
Cabinet Pierre Herrburger 115, boulevard
Haussmann
F-75008 Paris (FR)

**Description**

La présente invention a pour objet des appareils à cuve tournante pouvant être utilisés alternativement comme pétrins, comme malaxeurs ou comme batteurs-mélangeurs.

Le secteur technique de l'invention est celui de la construction des appareils de pétrissage, de malaxage et de mélange de produits alimentaires ou autres.

On connaît des pétrins qui comportent une cuve à axe vertical ouverte vers le haut et un bras de pétrissage qui plonge dans la cuve et qui est entraîné en rotation autour d'un axe incliné par rapport à l'axe vertical de la cuve.

On connaît notamment des pétrins-malaxeurs dans lesquels la cuve comporte un couvercle rabattable qui est creux et qui contient un motoréducteur à axe horizontal. Un tel appareil est décrit dans le brevet français N° FR-A-2 519 267 (M. LOISELET et Al.).

La présente invention a pour objet des perfectionnements à l'appareil décrit dans cette demande antérieure en vue d'obtenir un appareil multifonctions qui peut être utilisé alternativement comme pétrin, comme malaxeur ou comme batteur-mélangeur.

L'appareil décrit dans cette demande antérieure est un pétrin qui comporte une cuve qui est montée librement rotative sur son axe et qui est entraînée en rotation par les frottements de la pâte sur les parois de la cuve.

Un tel appareil ne peut pas être utilisé comme mélangeur de produits plus fluides comme par exemple des oeufs, des jus de fruits etc...., car dans ce cas, les frottements du liquide contre les parois de la cuve ne suffisent pas à entraîner celle-ci.

Un objectif de la présente invention est de procurer un appareil dans lequel le même motoréducteur peut être utilisé pour entraîner en rotation à la fois le bras malaxeur et la cuve aux vitesses voulues et dans des sens rotatifs voulus.

Les pétrins connus comportent un motoréducteur qui entraîne le bras de pétrissage à une vitesse relativement faible, inférieure à 100 t/minute. Cette vitesse est insuffisante pour entraîner un fouet ou un batteur qui doit tourner à une vitesse nettement supérieure.

Un autre objectif de la présente invention est de procurer un appareil perfectionné comportant des multiplicateurs de vitesse amovibles, facilement adaptables en bout de l'arbre d'entraînement du bras de pétrissage, en vue d'y adapter des outils de battage.

Les appareils multifonction selon l'invention sont des pétrins transformables en mélangeurs et en batteurs

Ils comportent, de façon connue, une cuve montée rotative autour d'un pivot vertical, un couvercle rabattable creux, dans lequel est logé un groupe motoréducteur à axe horizontal et un engrenage à pignons coniques, qui transmet le mouvement de l'arbre horizontal de sortie dudit groupe à un arbre incliné à 45° par rapport à la verticale, sur lequel s'adapte un outil de pétrissage ou de malaxage.

Les objectifs de l'invention sont atteints au moyen d'appareils de ce type dans lesquels l'engrenage qui entraîne le bras incliné comporte un troisième pignon conique à axe vertical, qui engrène avec le pignon conique intermédiaire monté sur ledit arbre incliné, lequel troisième pignon conique entraîne un arbre vertical ayant une extrémité sur laquelle est monté un galet qui entraîne par friction le bord de ladite cuve, avec une démultiplication de vitesse de l'ordre de 10, dans le même sens que ledit arbre incliné.

Avantageusement ledit galet a une forme troncoconique convergente vers le bas et le bord externe de la cuve contre lequel ledit galet s'appuie a également une forme tronconique inverse.

Selon le mode de réalisation de l'invention, ledit galet est fixé de façon amovible par une vis à tête moletée qui est vissée à l'extrémité de l'arbre d'entraînement du galet, de sorte que l'on peut supprimer l'entraînement de la cuve lorsqu'on utilise l'appareil comme pétrin.

Un appareil selon l'invention utilisé comme batteur comporte un outil rotatif qui est entraîné en rotation par un engrenage multiplicateur de vitesse enfermé dans un carter amovible, lequel engrenage multiplicateur comporte une douille cannelée qui est emmanchée sur l'extrémité cannelée dudit arbre incliné.

Avantageusement ledit carter est fixé de façon amovible par une ou plusieurs vis à tête moletée qui se vissent dans une équerre vissée sous la face inférieure du couvercle.

L'invention a pour résultat un pétrin dont la capacité peut aller jusqu'à 100 litres qui est facilement transformable en mélangeur à cuve entraînée en rotation pour mélanger des produits fluides et en batteur à fouet ou à palette tournant à grande vitesse sur lequel on peut adapter soit des outils à mouvement planétaire, soit des outils à mouvement rotatif autour d'un axe fixe.

Un appareil multifonction selon l'invention est particulièrement avantageux pour de nombreux utilisateurs tels que par exemple les traiteurs, les charcutiers, les restaurateurs etc... qui ont à exécuter des travaux de pétrissage de pâtes, des mélanges de produits fluides ou peu consistants et des battages de produits destinés à former les émulsions. Dans la plupart des cas, ces utilisateurs possèdent plusieurs appareils distincts : un pétrin qui tourne à faible vitesse inférieure à 100 t/minute et qui permet uniquement de pétrir des pâtes et un ou plusieurs batteurs-mélangeurs qui tournent à des vitesses plus élevées, de l'ordre de 100 à 1000 t/minute.

Un appareil selon l'invention, qui comporte un arbre incliné tournant à une vitesse maxima de l'ordre de 100 t/minute pour entraîner un bras de pétrissage, permet d'entraîner à partir du même groupe motoréducteur, à la fois la cuve à une vitesse de l'ordre de 3 à 15 t/minute, soit des fouets ou palettes de battage à des vitesses de l'ordre de 100 à 500 t/minute. Il permet également de laisser la cuve tourner librement lorsque l'appareil est utilisé comme pétrin.

L'entraînement des outils de battage par un arbre incliné à 45° par rapport à l'axe vertical de la cuve permet d'adapter sur l'appareil un outil de battage à mouvement planétaire pivotant autour de son sommet qui reste stationnaire au voisinage du fond de la cuve.

Le cône décrit par l'axe du batteur dans son mouvement planétaire étant axé sur l'axe du bras d'entraînement qui est incliné à 45°, il en résulte que le fouet ou la palette balaye le fond de la cuve, ce qui permet de racler celui-ci et d'atteindre une grande partie du volume intérieur de la cuve, notamment du volume situé dans le fond de la cuve, de sorte que l'on peut utiliser une cuve de grand volume pour battre des volumes beaucoup plus réduits, par exemple des volumes de quelques litres dans une cuve de 30 litres.

La description suivante se réfère aux dessins annexés qui représentent, sans aucun caractère limitatif, des exemples de réalisation d'un premier appareil selon l'invention qui est un pétrin utilisable comme malaxeur et comme batteur-mélangeur et d'un deuxième appareil polyvalent.

- La figure 1 est une coupe verticale axiale d'un premier appareil.
- La figure 2 est une coupe à plus grande échelle du mécanisme d'entraînement en rotation de la cuve.
- La figure 3 est une coupe verticale axiale du premier appareil utilisé comme batteur à mouvement planétaire.
- La figure 4 est une coupe à plus grande échelle du mécanisme d'entraînement du fouet de battage de l'appareil selon la figure 3.
- La figure 5 est une coupe verticale axiale de l'appareil selon la figure 1 utilisé comme batteur de produits liquides.
- La figure 6 est une coupe à plus grande échelle du mécanisme d'entraînement de l'outil de battage de l'appareil selon la figure 5.
- La figure 7 est une coupe axiale selon VII-VII d'un appareil selon la figure 1.
- La figure 8 est une coupe verticale d'un deuxième appareil utilisable en pétrin, en malaxeur, en batteur-mélangeur ou en cutter.

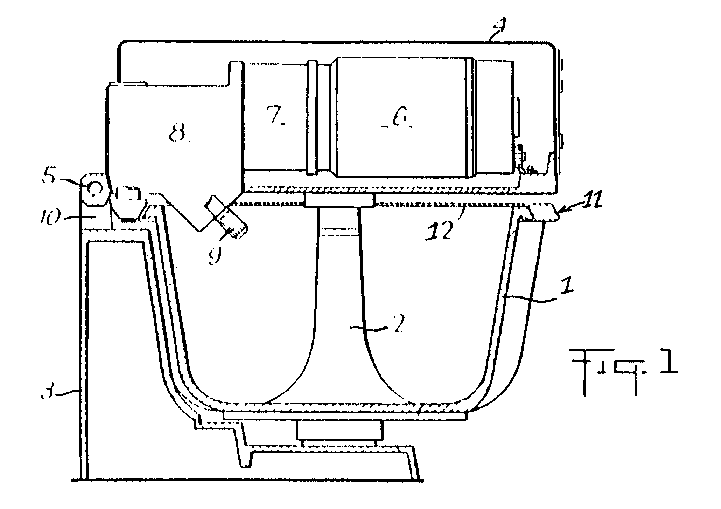

La figure 1 représente un appareil qui comporte, de façon connue, une cuve de malaxage 1 qui est montée tournante sur un pivot central 2 à axe vertical, qui est monté sur un bâti 3.

La cuve 1 est ouverte à l'extrémité supérieure et l'ouverture est obturée partiellement par un couvercle 4 qui est articulé autour d'un axe horizontal 5. Le couvercle 4 a la forme d'un boîtier creux et il renferme un moteur 6 et un réducteur 7 à axe horizontal.

L'arbre de sortie du réducteur tourne à une vitesse comprise entre 20 et 100 t/minute. Il entraîne un engrenage 8 situé dans le couvercle 4 qui comporte deux pignons coniques à 45°. Le bout d'arbre sortant dudit engrenage comporte une extrémité cannelée 9 sur laquelle on vient emmancher un bras de pétrissage qui tourne à une vitesse variable entre 20 et 100 t/minute. Le moteur 6 est un moteur à vitesse variable qui tourne à une vitesse maxima de 4000 t/minute et qui permet de faire varier la vitesse de rotation du bras de pétrissage.

Tout ce qui précède est la description d'un appareil connu qui fait l'objet de la demande de brevet FR. 81 24 652 et pour plus de détails, on se rapportera à la description détaillée contenue dans cette demande antérieure.

L'appareil connu est un pétrin qui comporte une cuve 1 librement rotative qui est entraînée en rotation par les frottements de la pâte. Un tel appareil ne peut pas être utilisé comme mélangeur de produits plus fluides comme par exemple des crèmes, des oeufs, des sauces, des jus de fruits etc..., car, dans ce cas, la cuve n'est plus entraînée en rotation par les frottements.

Un appareil selon l'invention se différencie de l'appareil connu par le fait qu'il comporte un galet 10 à axe vertical qui entraîne la cuve en rotation par friction contre le bord supérieur externe de la cuve.

Selon un mode de réalisation préférentiel, le galet 10 est un galet conique de forme convergente vers le bas et le bord externe 11 de la cuve a une forme tronconique inverse qui converge vers le haut, de sorte que lorsqu'on fait pivoter le couvercle autour de l'axe 5, le galet 10 se dégage librement du contact avec le bord de la cuve.

On voit sur la figure 1 que le galet 10 est situé à proximité immédiate de l'axe 5 autour duquel pivote le couvercle.

Pour faciliter l'entraînement par friction, le bord supérieur de la cuve est également garni d'un rebord ou bandage 12 en matériau élastomère.

Le galet 10 a un diamètre externe qui est environ dix fois plus petit que le diamètre du bord 11 de la cuve, de sorte que la cuve est entraînée à vitesse très lente, de l'ordre de 3 à 15 t/minute, vitesse qui convient parfaitement pour une cuve de malaxage ou de battage.

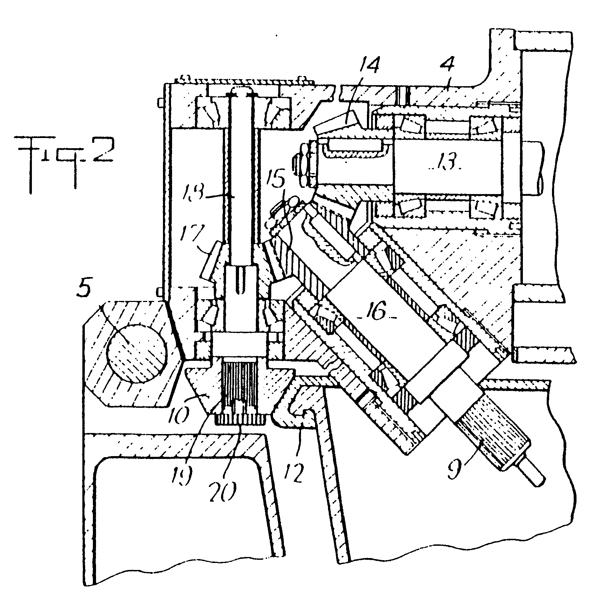

La figure 2 est une coupe axiale de l'engrenage 8. On voit sur cette figure l'arbre 13 qui est l'arbre de sortie du réducteur 7 à l'extrémité duquel est monté un pignon conique 14 qui engrène avec un deuxième pignon conique 15 monté sur l'arbre oblique 16, dont l'extrémité 9 est cannelée. Les pignons 14 et 15 forment un renvoi d'angle à 45°. Les arbres 13 et 16 sont situés dans un même plan vertical.

L'engrenage 8 comporte un troisième pignon conique 17 qui engrène avec le pignon intermédiaire 15. Le pignon 17 est monté sur un arbre 18. Les pignons 15 et 17 forment un renvoi d'angle à 45°, de sorte que l'arbre 18 est vertical. L'arbre 18 comporte, à l'extrémité inférieure, des cannelures 19 sur lesquelles est emmanché le galet conique 10 qui est lui-même cannelé intérieurement. Le galet 10 est bloqué par une vis à tête moletée 20, de sorte qu'il est très facile de démonter le galet 10 en soulevant le couvercle lorsqu'on doit utiliser l'appareil comme pétrin avec une cuve tournant librement.

On voit que la cuve 1 qui tourne en sens inverse du galet 10, tourne dans le même sens que l'arbre incliné 16 qui porte le bras malaxeur, ce qui est une disposition favorable pour un bon malaxage de produits fluides, crémeux ou pâteux.

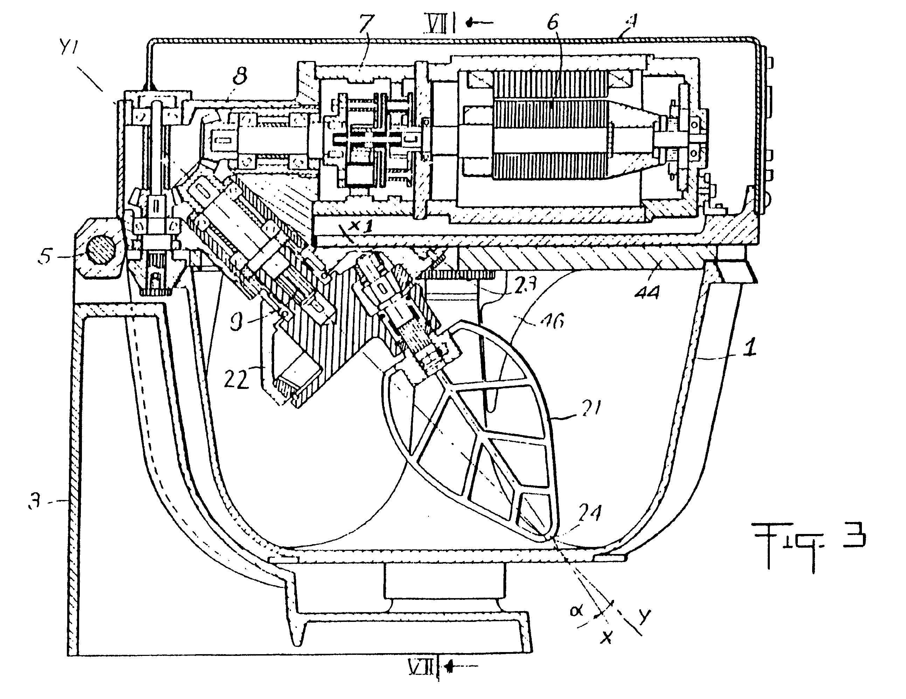

La figure 3 représente une coupe verticale du même appareil utilisé comme batteur, par exemple pour monter des oeufs en neige ou pour battre une crème au moyen d'un outil 21, qui est une palette ou un fouet, entraîné en rotation à une vitesse de l'ordre de 100 à 450 t/minute.

L'outil 21 est solidaire d'un pignon satellite qui fait partie d'un engranege épicycloïdal multiplicateur de vitesse, qui est contenu dans un carter 22, qui est emmanché sur l'extrémité cannelée 9 et qui est fixé au couvercle de façon facilement et rapidement démontable par une ou plusieurs vis à tête moletée 23.

L'axe x x1 de l'outil forme avec l'axe y y1 de l'arbre incliné 16 un angle α qui est de l'ordre de 10° et ces deux axes concourent en un point voisin du fond de la cuve et l'outil a une longueur telle que son sommet 24 situé à l'extrémité inférieure se trouve au point de convergence des axes x x1 et y y1. Ainsi, lorsque le pignon satellite roule sur le planétaire, le fouet tourne sur lui-même et se déplace en suivant la surface d'un cône d'ouverture α dont le sommet est voisin du fond de la cuve.

Le sommet 24 du fouet reste toujours sensiblement au même point et l'outil 21 balaye dans sa course le fond de la cuve en passant au plus près de celui-ci.

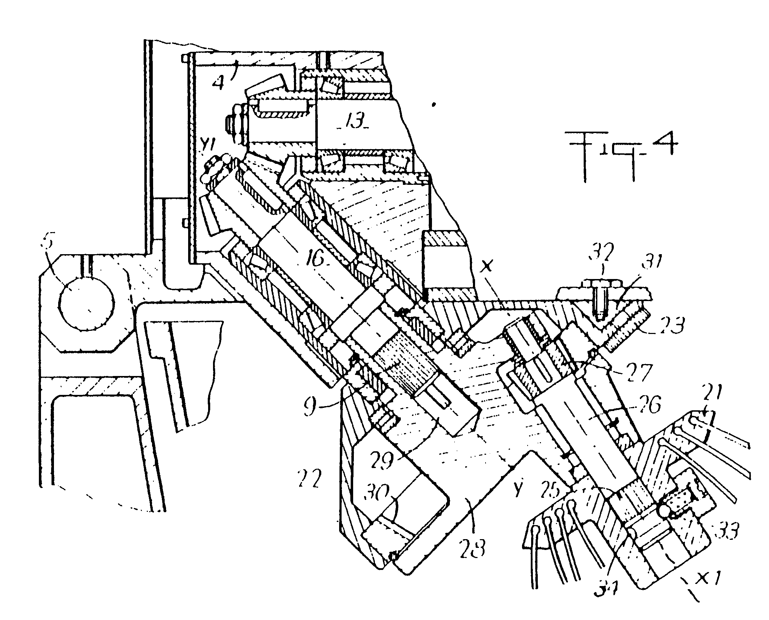

La figure 4 représente une coupe du carter 22 et de l'engrenage épicycloïdal passant par l'axe y y1 de l'arbre incliné 16.

On voit sur cette figure l'extrémité supérieure d'un outil 21 qui comporte un alésage cannelé qui est emmanché sur l'extrémité cannelée 25 d'un arbre 26 d'axe x x1, sur l'autre extrémité duquel est claveté un pignon satellite 27 de forme légèrement conique. L'arbre 26 est monté rotatif sur une douille 28 comportant un alésage cannelé 29, qui est emmanché sur les cannelures 9. Le pignon satellite 27 engrène avec une couronne dentée 30 qui est solidaire du carter 22. L'arbre 16 entraîne la douille 28 en rotation, ce qui a pour effet de faire tourner le pignon satellite 27 sur lui-même pendant qu'il roule sur la couronne dentée 30, de sorte que l'outil 21 tourne sur lui-même avec une vitesse multipliée par le rapport entre le nombre de dents de la couronne 30 et le nombre de dents du pignon 27 et en même temps, l'axe x x1 se déplace d'un mouvement planétaire le long d'un cône d'ouverture α centré sur l'axe y y1.

Le mise en place du carter amovible 22 contenant l'engrenage épicycloïdal 27, 30 est réalisée rapidement en emmanchant la douille 28 sur les cannelures 9 et en fixant le carter au couvercle 4 par une ou plusieurs vis à tête moletée 23 qui pénètrent dans une équerre 31 fixée au fond du couvercle par des vis 32. Les fouets et palettes 21 sont interchangeables. Ils sont fixés à l'extrémité de l'arbre 26 par un cliquet à bille et à ressort 33 dont la bille pénètre dans une gorge 34.

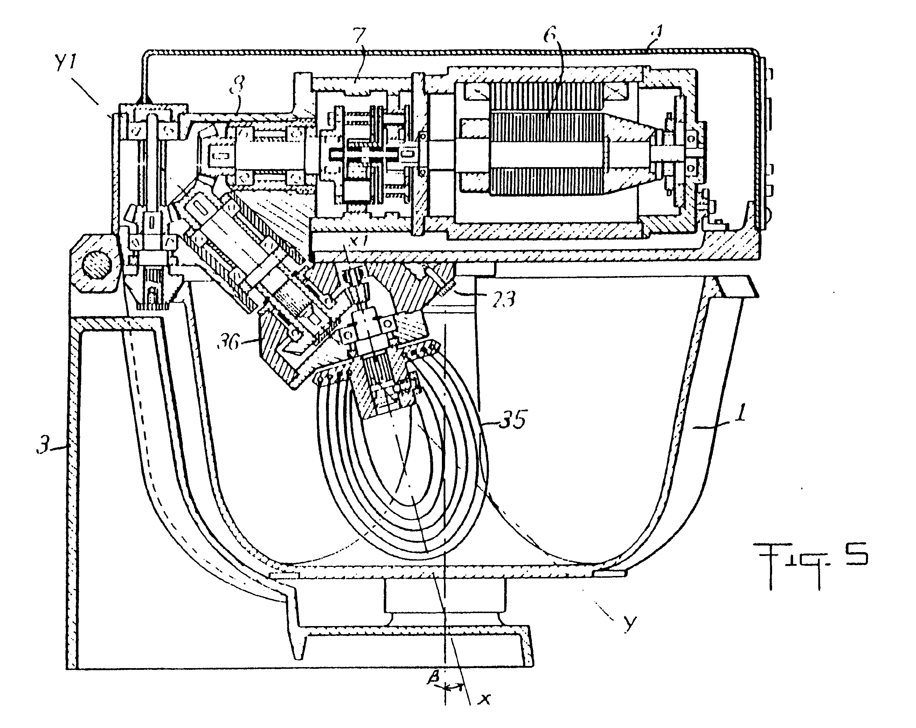

La figure 5 représente une coupe verticale du même appareil équipé d'un fouet de battage rotatif 35 dont le mouvement n'est pas planétaire. Dans ce cas, le fouet 35, qui peut être remplacé par une palette, est soliaire d'un pignon d'entraînement qui fait partie d'un engrenage multiplicateur de vitesse contenu dans un carter 36 qui est fixé de façon rapidement amovible par une rangée de vis 23 sous le couvercle 4.

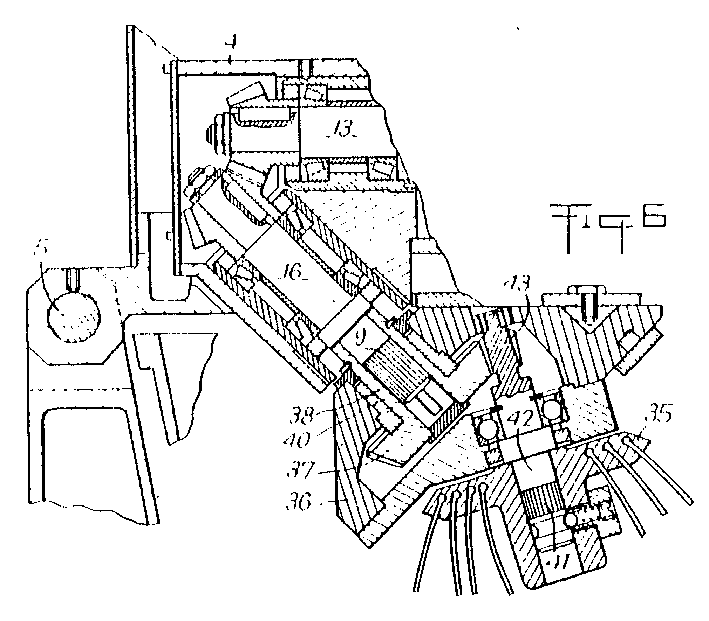

Les figures 5 et 6 représentent un mode de réalisation préférentiel dans lequel l'axe x x1 du fouet est incliné et forme avec la verticale un angle β de l'ordre de 15°. Il est précisé que cet exemple n'est pas limitatif et l'angle β peut être compris entre 0 et 15°

Ce mode de réalisation permet d'utiliser le même appareil comme batteur, soit avec un outil tournant animé d'un mouvement planétaire soit avec un outil tournant autour d'un axe fixe incliné ou vertical selon les produits à battre.

Par exemple, pour monter des oeufs en neige ou pour faire une mayonnaise, on utilisera de préférence, le mode de réalisation selon les figures 5 et 6.

La figure 6 est une coupe axiale qui représente les détails de réalisation de l'engrenage multiplicateur contenu dans le carter amovible 36.

L'engrenage comporte un pignon conique 37 qui est solidaire d'une douille cannelée 38, qui est engagée sur les cannelures 9. La douille tournante 38, est portée par un palier 40.

L'outil 35 est emmanché sur une extrémité cannelée 41 d'un arbre 42 dont l'autre extrémité porte un pignon conique 43 qui engrène avec le pignon 37.

Le rapport de multiplication peut varier selon les applications entre 1,5 et 5, de sorte que la vitesse maxima de rotation de l'outil 35 peut être comprise entre 150 et 500 t/minute pour un arbre 16 qui tourne à une vitesse maxima de 100 t/minute.

On remarquera que les batteurs 21 et 35 tournent en sens inverse de l'arbre incliné 16, donc également en sens inverse de la cuve 1, ce qui donne les meilleurs résultats de battage.

Pour obtenir un batteur tournant à axe vertical, on utilise un engrenage multiplicateur comportant deux pignons coniques 37 et 43 ayant une conicité de 22,5° et formant un renvoi d'angle à 45°.

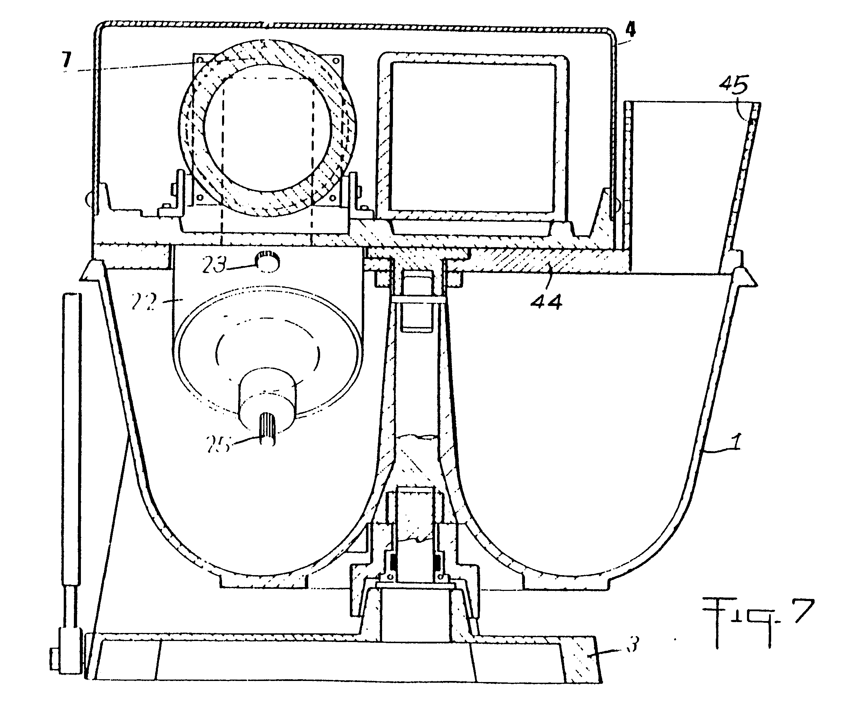

La figure 7 est une coupe axiale selon VII-VII d'un appareil selon la figure 3 sans l'outil rotatif. On voit sur cette figure le carter 22 qui est fixé au couvercle par une vis 23 et l'arbre cannelé 25 sur lequel est emmanché un outil tournant qui peut être un fouet ou une palette. On voit également que la cuve 1 est fermée par un couvercle transparent 44 qui comporte une trémie 45 pour introduire dans la cuve les produits à battre ou à mélanger. La trémie 45 est située du côté du pivot opposé à celui où se trouve l'outil tournant. Le couvercle 44 évite les projections et permet de contrôler les opérations visuellement. Il est fixé au couvercle par un écrou moleté et il est donc facilement démontable pour être lavé.

Le couvercle 44 porte des racloirs qui plongent dans la cuve.

La figure 3 représente le couvercle 44 et un racloir 46 qui est fixé à celui-ci et qui racle la paroi du pivot central pour ramener les produits vers le fond de la cuve.

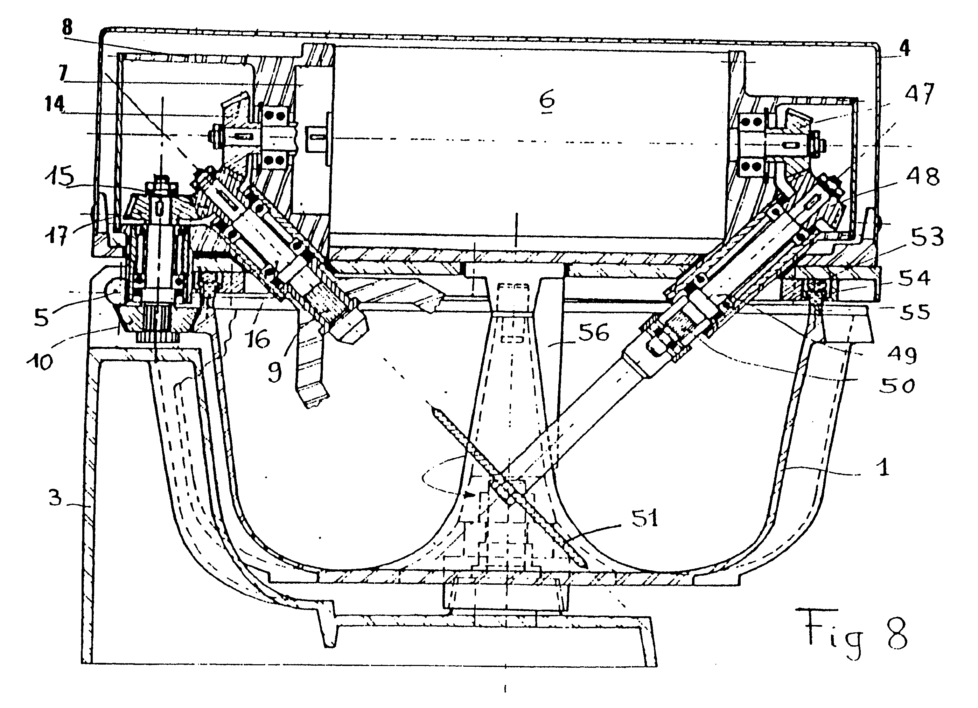

La figure 8 représente une coupe verticale passant par l'axe du moteur d'un autre mode de réalisation d'un deuxième appareil selon l'invention qui peut être utilisé alternativement comme pétrin, comme mélangeur, comme batteur-malaxeur et comme cutter.

Les parties homologues à celles de la figure 1 sont représentées par les mêmes repères.

Le réducteur 7 qui entraîne l'engrenage 8 est un réducteur plat, par exemple un réducteur vendu par HARMONIC DRIVE SYSTEMS sous les références H DUF ou H DUC.

La partie gauche de la figure, c'est-à-dire l'entraînement de l'arbre cannelé et l'entraînement du galet 10 entraînant la cuve 1 en rotation sont identiques.

L'arbre 16 peut recevoir un bras de pétrissage ou un bras mélangeur. Il peut également recevoir un multiplicateur de vitesse amovible tel que les multiplicateurs 22 ou 26 pour entraîner un fouet ou une palette de battage.

La deuxième extrémité de l'arbre du moteur 6, située à droite de la figure, porte un pignon conique 47 qui entraîne un deuxième pignon conique 48, monté sur une extrémité d'un deuxième arbre incliné conique 48, monté sur une extrémité d'un deuxième arbre incliné 49 ayant une extrémité cannelée 50. L'arbre 49 est incliné à 45° et il plonge dans la cuve 1. Il est situé dans le même plan vertical que l'arbre 16 qui est le plan vertical passant par l'axe du moteur 6.

Dans le mode de réalisation représenté sur la figure 8, l'arbre 49 est entraîné à la même vitesse que le moteur 6, c'est-à-dire à une vitesse maxima de 5000 t/minute. En variante, on peut intercaler un réducteur de rapport 1/2 entre l'arbre moteur et l'arbre 49.

L'extrémité cannelée 50 de l'arbre 49 reçoit un cutter 51 constitué par un disque à bord tranchant qui est situé dans un plan oblique incliné à 45°. Les engrenages 47, 48 d'une part, et 14, 15, 17, d'autre part, ainsi que l'entraînement en rotation de la cuve par le galet 10 font que la cuve 1 est entraînée en rotation dans le sens où elle amène les produits à hacher sous le plan dans lequel se situe le disque 51.

Par exemple, sur la figure 8, la cuve 1 tourne dans le sens de la flèche F, c'est-à-dire dans le sens inverse des aiguilles d'une montre.

Cette condition est très importante car la cuve pousse les produits à hacher sous le disque coupant en les obligeant à s'enfourner sous celui-ci pour être hachés. Si la cuve tourne en sens inverse, les produits à hacher sont rejetés par le disque tournant à grande vitesse.

La disposition du cutter 51 dans un plan incliné est meilleure que les dispositions habituelles dans un plan vertical ou horizontal. Elle permet de hacher des quantités de viande ou de pain par exemple nettement inférieures à la capacité totale de la cuve. Elle permet par exemple de hacher 1,5 litre de matière dans une cuve de 30 litres.

L'appareil selon la figure 8 est un appareil polyvalent pouvant être utilisé alternativement comme pétrin, comme malaxeur, comme batteur-mélangeur ou comme cutter. Bien entendu, les deux bras inclinés 16 et 49 ne peuvent pas être utilisés simultanément.

L'appareil selon la figure 8 comporte une garniture d'étanchéité intercalée entre la cuve tournante et le couvercle fixe. Cette garniture comporte, d'une part, un joint torique 53 en silicone mou et un joint annulaire 54 en polytétrafluoréthylène, qui sont placés dans une gorge du couvercle et qui sont fixes. Elle comporte, d'autre part, un joint annulaire 55 en polyamide, qui est fixé sur le bord supérieur de la cuve et qui appuie en contact tournant contre le joint 54. Le joint torique mou 53 est légèrement comprimé. Il permet de légères oscillations de la cuve de l'ordre de 2 à 3 mm.

La garniture d'étanchéité 52 permet de mettre la cuve en légère pression de quelques millibars ou sous atmosphère de gaz neutre (azote $-CO_2$) pour éviter l'oxydation des denrées pendant le hachage.

La cuve de l'appareil selon la figure 1 comporte un racloir fixe 56 qui est fixé au couvercle et qui balaye la paroi du pivot central de la cuve pour ramener les produits à hacher vers le cutter 51.

Il comporte un deuxième racloir fixe, non visible sur la figure 8, qui est également fixé au couvercle et qui suit la paroi latérale de la cuve 1.

De façon avantageuse l'un des racloirs comporte une sonde thermométrique incorporée. Cette sonde est ainsi protégée par le racloir tout en étant au coeur de la matière travaillée par l'appareil. De façon avantageuse cette sonde est logée dans un tube en inox intégré au racloir lors de la coulée de celui-ci en aluminium.

## Revendications

1. Appareil de pétrissage transformable en mélangeur et en batteur du type comportant une cuve (1) montée rotative autour d'un pivot vertical (3), un couvercle rabattable creux (4), dans lequel est logé un groupe motoréducteur (6, 7) à axe horizontal et un engrenage (8) à pignons coniques, qui transmet le mouvement à l'arbre horizontal de sortie dudit groupe à un arbre (16) incliné à 45° par rapport à la verticale, sur lequel s'adapte un outil, caractérisé en ce que ledit engrenage (8) comporte un troisième pignon conique (17) à axe vertical, qui engrène avec le pignon conique intermédiaire (15) monté sur ledit arbre incliné (16) lequel troisième pignon conique entraîne un arbre vertical (18) ayant une extrémité cannelée (19) sur laquelle est monté un galet (10) fixé de façon amovible notamment par une vis à tête moletée (20) vissée à l'extrémité de l'arbre d'entraînement (18) et qui entraîne par friction le bord de ladite cuve avec une démultiplication de vitesse de l'ordre de 10, dans le même sens que ledit arbre incliné (16).

2. Appareil selon la revendication 1, caractérisé en ce que ledit galet (10) a une forme tronconique convergente vers le bas et le bord externe de la cuve contre lequel il s'appuie a une forme tronconique inverse.

3. Appareil selon l'une quelconque des revendications 1 et 2, caractérisé en ce que le bord supérieur de la cuve est garni d'un bandage (12) en matériau élastomère en appui sur celui-ci, la bordure d'appui du galet sur ce matériau élastomère étant le cas échéant molletée ou dentée.

4. Appareil selon l'une quelconque des revendications 1 à 3, utilisé comme batteur, caractérisé en ce qu'il comporte un outil rotatif (21, 35) qui est entraîné en rotation par un engrenage multiplicateur de vitesse enfermé dans un carter amovible (22, 36), lequel engrenage multiplicateur comporte une douille cannelée (28, 38) qui est emmanchée sur l'extrémité cannelée (9) dudit arbre incliné (14).

5. Appareil selon la revendication 4, caractérisé en ce que ledit carter (22, 36) est fixé de façon amovible par une ou plusieurs vis à tête moletée (23) qui se vissent dans une équerre (31) vissée sous la face inférieure du couvercle (4).

6. Appareil selon l'une quelconque des revendications 4 et 5, caractérisé en ce que ledit outil (21) est solidaire d'un pignon satellite (27) qui est porté par ladite douille cannelée (28) et qui roule à l'intérieur d'une couronne dentée fixe (30), de sorte que ledit outil est animé d'un mouvement planétaire.

7. Appareil selon la revendication 6, caractérisé en ce que ledit pignon satellite et ladite couronne dentée sont coniques, de sorte que l'axe (x-x1) dudit outil et l'axe (y-y1) dudit arbre incliné forment un angle ($\alpha$) de l'ordre de 10° et concourent en un point voisin du fond de la cuve et le sommet (24) dudit outil se trouve à proximité de ce point, de sorte qu'il reste pratiquement fixe pendant la rotation de l'outil.

8. Appareil selon l'une quelconque des revendications 4 et 5, caractérisé en ce que ledit outil est solidaire d'un pignon conique (43) qui engrène avec un deuxième pignon conique (37) qui est solidaire de ladite douille cannelée (40).

9. Appareil selon l'une quelconque des revendications 1 à 8, caractérisé en ce qu'il comporte un couvercle transparent (44) lavable qui est fixé au fond dudit couvercle creux (4) de façon amovible, lequel couvercle comporte une trémie (45) pour l'introduction des produits dans la cuve et au moins un racloir (46) qui plonge dans la cuve.

10. Appareil selon l'une quelconque des revendications 1 à 9, transformable en cutter, caractérisé en ce que ledit moteur (6) entraîne à grande vitesse un deuxième arbre oblique (49), situé dans le plan vertical passant par l'axe dudit moteur, lequel deuxième arbre comporte une extrémité cannelée (50) sur laquelle on peut adapter un disque à bord tranchant (51) faisant fonction de cutter, qui est situé dans un plan incliné.

11. Appareil selon la revendication 10, caractérisé en ce que la cuve (1) est entraînée en rotation dans le sens où elle pousse les produits sous le plan incliné dudit disque.

12. Appareil selon l'une quelconque des revendications 10 et 11, caractérisé en ce qu'il comporte une garniture d'étanchéité composée d'un joint torique (53) en silicone mou et d'un premier joint annulaire (54) en polytétrafluoréthylène qui sont fixés sous la face inférieure dudit couvercle creux (4) et un deuxième joint annulaire (55) en polyamide qui est fixé au bord supérieur de ladite cuve (1) et qui frotte en tournant contre ledit premier joint annulaire (54).

13. Appareil selon la revendication 9, caractérisé en ce qu'il comporte une sonde thermométrique incorporée au racloir (46).

14. Appareil selon l'une quelconque des revendications 1 à 13, caractérisé en ce que la cuve (1) est montée sur un bâti (3) coopérant avec des organes d'aération suceptibles de mettre la cuve (1) en légère pression de quelques millibars ou sous atmosphère de gaz neutre.

## Ansprüche

1. Als Misch- und Schlagmaschine umrüstbare Knetmaschine, bestehend aus einem um eine vertikale Achse (2) drehbar angebrachten Behälter (1) und einem herunterklappbaren hohlen Deckel (4), in dem ein Getriebemotorsatz (6, 7) mit horizontaler Achse und ein Kegelradgetriebe (8) untergebracht ist, das die Bewegung der horizontalen Welle des Ausgangs des Getriebemotorsatzes auf eine um 45° zur Vertikalen geneigte Welle (16) überträgt, auf der ein Werkzeug angebracht ist, dadurch gekennzeichnet, daß das Getriebe (8) ein drittes Kegelrad (17) mit vertikaler Achse umfaßt, das mit dem auf der geneigten Welle (16) angebrachten Zwischenkegelrad (15) kämmt, welches dritte Kegelrad eine vertikale Welle (18) mit einem längsgenuteten Ende (19) antreibt, auf dem eine Rolle (10) angebracht ist, die insbesondere durch eine auf das Ende der Antriebswelle (18) aufgeschraubte Rändelkopfschraube (20) abnehmbar festgelegt ist und die durch Reibung den Rand des Behälters mit einer Geschwindigkeitsuntersetzung in der Größenordnung von 10, im gleichen Sinn wie die geneigte Welle (16), antreibt.

2. Maschine nach Anspruch 1, dadurch gekennzeichnet, daß die Rolle (10) eine nach unten konvergierende Kegelstumpfform aufweist und der Außenrand des Behälters, gegen den sie sich abstützt, eine umgekehrte Kegelstumpfform besitzt.

3. Maschine nach einem der Ansprüche 1 und 2, dadurch gekennzeichnet, daß der obere Rand des Behälters mit einem sich auf diesem abstützenden Mantel (12) aus elastomerem Material versehen ist, wobei der sich auf dem elastomeren Material abstützende Rand der Rolle gegebenenfalls gerändelt oder gezahnt ist.

4. Maschine nach einem der Ansprüche 1 bis 3, verwendet als Schlagmaschine, dadurch gekennzeichnet, daß sie ein Drehwerkzeug (21, 35) umfaßt, das von einem in einem abnehmbaren Gehäuse (22, 36) eingeschlossenen Geschwindigkeitsübersetzungsgetriebe für eine Drehung antreibbar ist, wobei das Übersetzungsgetriebe eine mit Längsnuten versehene Hülse (28, 38) umfaßt, die auf das längsgenutete Ende (9) der geneigten Welle (16) aufgeschoben ist.

5. Maschine nach Anspruch 4, dadurch gekennzeichnet, daß das Gehäuse (22, 36) abnehmbar durch eine oder mehrere Rändelkopfschrauben (23) lösbar festgelegt ist, die in einen unter die Unterseite des Deckels (4) geschraubten Winkel (31) eingeschraubt sind.

6. Maschine nach einem der Ansprüche 4 und 5, dadurch gekennzeichnet, daß das Werkzeug (21) einteilig mit einem Satellitenrad (27) ausgebildet ist, das von der längsgenuteten Hülse (28) abgestützt ist und im Inneren eines festen Zahnkranzes (30) abrollt, derart, daß das Werkzeug eine Planetenbewegung erhält.

7. Maschine nach Anspruch 6, dadurch gekennzeichnet, daß das Satellitenrad und der Zahnkranz konisch ausgebildet sind, derart, daß die Achse (x-x1) des Werkzeugs und die Achse (y-y1) der geneigten Welle einen Winkel (α) in der Größenordnung von 10° bilden und in einem Punkt nahe dem Boden des Behälters zusammenlaufen und sich die Spitze (24) des Werkzeugs in der Nähe dieses Punktes befindet, derart, daß sie während der Rotation des Werkzeugs praktisch ortsfest bleibt.

8. Maschine nach einem der Ansprüche 4 und 5, dadurch gekennzeichnet, daß das Werkzeug einteilig mit einem Kegelrad (43) ausgebildet ist, das mit einem zweiten Kegelrad (37) kämmt, das einteilig mit der längsgenuteten Hülse (40) ausgebildet ist.

9. Maschine nach einem der Ansprüche 1 bis 8, dadurch gekennzeichnet, daß sie einen abwaschbaren transparenten Deckel (44) umfaßt, der am Boden des hohlen Deckels (4) abnehmbar befestigt ist, welcher Deckel einen Trichter (45) für die Einführung der Produkte in den Behälter und zumindest einen in den Behälter eintauchenden Schaber (46) umfaßt.

10. Maschine nach einem der Ansprüche 1 bis 9, umrüstbar als Schneidwerk, dadurch gekennzeichnet, daß der Motor (6) mit hoher Geschwindigkeit eine zweite Schrägwelle (49) antreibt, die in der durch die Achse des Motors laufenden vertikalen Ebene angeordnet ist, welche zweite Welle ein längsgenutetes Ende (50) umfaßt, auf dem eine die Funktion eines Schneidwerks ausführende Scheibe (51) mit Schneidrand anbringbar ist, die sich in einer geneigten Ebene befindet.

11. Maschine nach Anspruch 10, dadurch gekennzeichnet, daß der Behälter (1) in dem Sinn in Drehung versetzt wird, in dem er die Produkte unter die geneigte Ebene der Scheibe schiebt.

12. Maschine nach einem der Ansprüche 10 und 11, dadurch gekennzeichnet, daß sie eine Dichtungsgarnitur umfaßt, die sich aus einer Ringdichtung (53) aus Weichsilikon und einer ersten Ringdichtung (54) aus Polytetrafluorethylen, die unter der Unterseite des hohlen Deckels (4) befestigt sind, und einer zweiten Ringdichtung (55) aus Polyamid zusammensetzt, die am oberen Rand des Behälters (1) befestigt ist und beim Drehen mit der ersten Ringdichtung (54) in Reibeingriff steht.

13. Maschine nach Anspruch 9, dadurch gekennzeichnet, daß sie eine in den Schaber (46) einbezogene Wärmemeßsonde umfaßt.

14. Maschine nach einem der Ansprüche 1 bis 13, dadurch gekennzeichnet, daß der Behälter (1) auf einem Gestell (3) angebracht ist, das mit Belüftungsorganen zusammenwirkt, um den Behälter (1) einem leichten Druck von einigen Millibar oder einer neutralen Gasatmosphäre auszusetzen.

**Claims**

1. Kneading apparatus which is convertible into a mixer and a beater of a type comprising a bowl (1) which is mounted so as to be rotable about a vertical pivot (3), a hinged hollow cover (4), in which there is seated a geared motor group (6, 7) having a horizontal axis and a gear train (8) of bevel gears, which transmits the movement of the horizontal output shaft of said group to a shaft (16) which is inclined at 45° with respect to the vertical, on which there is fitted a tool, characterised in that said gear train (8) comprises a third bevel gear (17) having a vertical axis, which gears with the intermediate bevel gear (15) mounted on said inclined shaft (16), said third bevel gear drives a vertical shaft (18) having a grooved end (19) on which there is mounted a roller (10) which is fixed so as to be removable notably by a knurled headed screw (20) which is screwed onto the end of the drive shaft (18) and which drives by friction the rim of said bowl with a speed reduction of the order of 10, in the same direction as said inclined shaft (16).

2. Apparatus as in claim 1, characterised in that said roller (10) has a downwardly convergent truncated form, and the outer rim of the bowl on which it is supported has an inverse truncated form.

3. Apparatus as in either of claims 1 and 2, characterised in that the upper rim of the bowl is provided with a covering (12) made of elastomer material bearing thereon, the periphery of the roller bearing on this elastomer material being where applicable knurled or toothed.

4. Apparatus as in any of claims 1 to 3, used as a beater, characterised in that it comprises a rotary tool (21, 35), which is rotated by a step-up gear train contained in a movable housing (22, 36), which step-up gear train comprises a grooved sleeve (28, 38) which is shrunk onto the grooved end (9) of said inclined shaft (14).

5. Apparatus as in claim 4, characterised in that said housing (22, 36) is fixed so as to be removable by one or more knurled headed screws (23) which are screwed in an angle (31) which is screwed underneath lower surface of the cover (4).

6. Apparatus as in either of claims 4 and 5, characterised in that said tool (21) is integral with a planet wheel (27) which is carried by said grooved sleeve (28) and which rolls on the inside of a fixed toothed ring (30) such that said tool is put into planetary motion.

7. Apparatus as in claim 6, characterised in that said planet wheel and said toothed ring are conical, such that the axis (x-x1) of said tool and the axis (y-y1) of said inclined shaft form an angle (α) of the order of 10° and coincide at a point adjacent to the base of the bowl and the tip (24) of said tool is adjacent to this point, such that it remains practically fixed during rotation of the tool.

8. Apparatus as in either of claims 4 and 5, characterised in that said tool is integral with a bevel gear (43) which engages with a second bevel gear (37) which is integral with said grooved sleeve (40).

9. Apparatus as in any of claim 1 to 8, characterised in that it comprises a washable transparent cover (44) which is fixed to the base of said hollow cover (4) so as to be movable, which cover comprises a hopper (45) for introducing products into the bowl and at least one scraper (46) which plunges into the bowl.

10. Apparatus as in any of claims 1 to 9, convertable into a cutter, characterised in that said motor (6) drives at a high speed a second oblique shaft (49), which is disposed in the vertical plane passing through the axis of said motor, which second shaft comprises a grooved end (50) on which there may be fitted a disc having a cutting edge (51) which acts as a cutter and which is disposed in an inclined plane.

11. Apparatus as in claim 10, characterised in that the bowl (1) is rotated in the direction in which it pushes the products beneath the inclined plane of said disc.

12. Apparatus as in either of claims 10 and 11, characterised in that it comprises a packing comprising a sealing ring (53) made of non-rigid silicone and a first annular joint (54) made of polytetrafluoroethylene, which are fixed underneath the lower surface of said hollow cover (4), and a second annular joint (55) made of polyamide which is fixed on the upper edge of said vat (1) and which on rotating rubs against said first annular joint (54).

13. Apparatus as in claim 9, characterised in that it comprises a thermometer probe which is incorporated in the scraper (46).

14. Apparatus as in any of claim 1 to 13, characterised in that the bowl (1) is mounted on a stand (3) which cooperates with ventilation means capable of putting the bowl (1) under a slight pressure of several millibars or under a neutral gas atmosphere.

Fig. 1

Fig. 2

EP 0 216 836 B1

Fig. 3

Fig. 4

Fig. 5

Fig.6

Fig. 7

Fig 8